# EUROPÄISCHE PATENTSCHRIFT

(11) **EP 0 495 027 B1**
(45) Veröffentlichungstag und Bekanntmachung des Hinweises auf die Patenterteilung: **10.05.1995**
(21) Anmeldenummer: 91912136.8
(22) Anmeldetag: 26.06.1991
(51) Int. Cl.: F21M 7/00, F21V 25/04

(54) **SCHEINWERFER FÜR KRAFTFAHRZEUGE**
HEADLAMP FOR MOTOR VEHICLES
PROJECTEUR POUR VEHICULES AUTOMOBILES

(30) Priorität: 02.08.1990 DE 4024495
(43) Veröffentlichungstag der Anmeldung: 22.07.1992
(73) Patentinhaber: ROBERT BOSCH GMBH, 70442 Stuttgart (DE)
(72) Erfinder: STEIN, Jürgen, D-7000 Stuttgart 30 (DE); WÖRNER, Bernhard, D-7000 Stuttgart 1 (DE); DELB, Fred, D-7580 Bühl-Oberweier (DE); WEIGOLD, Thomas, D-7570 Baden-Baden 11 (DE); SCHMIED, Friedrich, D-7417 Pfullingen (DE); KUSSEROW, Peter, D-7419 Sonnenbühl (DE); KAISER, Bernd, D-7831 Sexau (DE)
(86) Internationale Anmeldenummer: DE9100517
(87) Internationale Veröffentlichungsnummer: WO9202757

(56) Entgegenhaltungen:
- DE-A- 2 108 352
- DE-A- 2 643 187
- DE-A- 4 012 282
- DE-C- 3 910 191

## Beschreibung

Die Erfindung betrifft einen Scheinwerfer für Kraftfahrzeuge nach der Gattung des Anspruchs 1.

Ein solcher Scheinwerfer ist durch die DE-A-3 910 191 bekannt. Dieser Scheinwerfer weist einen Reflektor auf, in den über einen Lampenträger eine Gasentladungslampe eingesetzt ist, die über eine Hochspannungsleitung mit einem elektrischen Vorschaltgerät verbunden ist. Der Lampenträger und die Gasentladungslampe sind an ihrer Rückseite mittels einer lösbaren Schutzkappe abgedeckt. Die Hochspannungsleitung weist eine Steckverbindung auf, die beim Entfernen der Schutzkappe getrennt wird, so daß die Hochspannungsleitung unterbrochen ist und der Betrieb der Gasentladungslampe verhindert ist. Die Steckverbindung muß dabei hochspannungsfest ausgeführt sein und ist daher aufwendig. Nachteilig bei diesem Scheinwerfer ist, daß bei einem Entfernen der Schutzkappe während des Betriebs der Gasentladungslampe an der getrennten Steckverbindung wegen der anliegenden Hochspannung ein Überschlag auftreten kann, was sowohl eine Gefahr für die die Schutzkappe entfernende Person darstellt als auch zu einer Beschädigung von Teilen des Scheinwerfers führen kann.

Durch die DE-A-2 643 187 ist außerdem eine Leuchte bekannt, die eine Gasentladungslampe als Lichtquelle aufweist und die ein entfernbares Leuchtenteil aufweist. Im entfernbaren Leuchtenteil sind ein elektrisches Vorschaltgerät, das zur Hochspannungsversorgung der Gasentladungslampe dient, und eine elektrische Leitung mit einem durch magnetische Kräfte betätigbaren Reed-Schalter angeordnet. Das entfernbare Leuchtenteil ist über eine Steckverbindung direkt mit den Anschlüssen der Gasentladungslampe verbindbar, wobei diese Steckverbindung wiederum hochspannungsfest ausgebildet sein muß und daher aufwendig ist.

Der erfindungsgemäße Scheinwerfer mit den Merkmalen des Anspruchs 1 hat demgegenüber den Vorteil, daß beim Entfernen der Schutzkappe die Hochspannungsleitung nicht unterbrochen wird, sondern nur die zusätzliche Leitung unterbrochen wird, so daß der Scheinwerfer einfach aufgebaut sein kann und außerdem auch beim Entfernen der Schutzkappe während des Betriebs der Gasentladungslampe keine Gefahr besteht.

Vorteilhafte Ausgestaltungen und Weiterbildungen der Erfindung sind in den Unteransprüchen gekennzeichnet. Durch die Ausgestaltung des Schalters gemäß Anspruch 2 wird dieser ohne mechanischen Kontakt zwischen dem Lampenträger und der Schutzkappe beim Entfernen bzw. Anbringen der Schutzkappe betätigt.

### Zeichnung

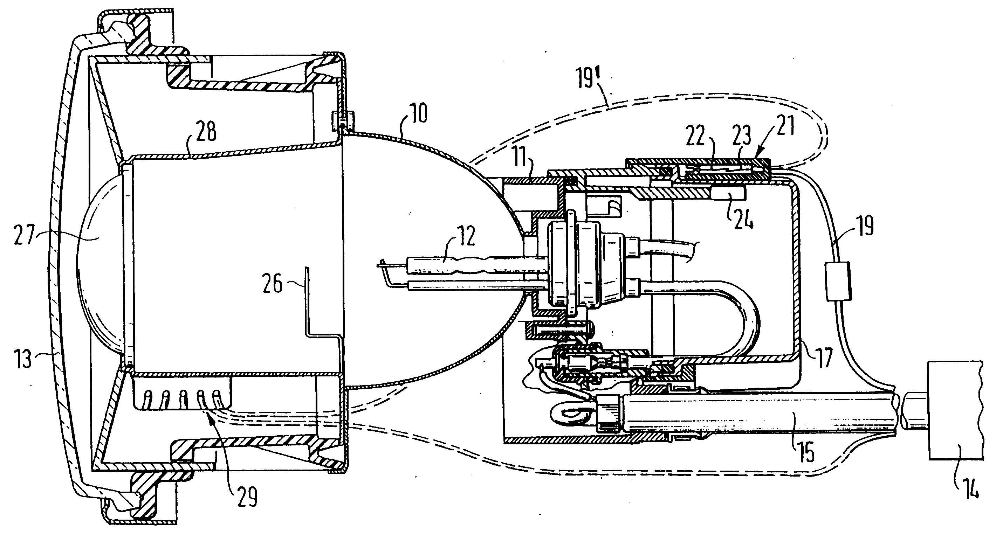

Ein Ausführungsbeispiel der Erfindung ist in der Zeichnung dargestellt und in der nachfolgenden Beschreibung näher erläutert. Die Figur zeigt einen Scheinwerfer für Kraftfahrzeuge im vertikalen Längsschnitt.

### Beschreibung

Ein in der Figur dargestellter Scheinwerfer für Kraftfahrzeuge weist einen Reflektor 10 auf, in dessen Scheitelbereich von der Rückseite her eine in einem Lampenträger 11 gehaltene Gasentladungslampe 12 eingesetzt ist. Die Lichtaustrittsöffnung des Scheinwerfers ist durch eine Lichtscheibe 13 abgedeckt. Die Gasentladungslampe 12 ist mit einem elektrischen Vorschaltgerät 14 über eine Leitung 15 verbunden, durch das sie mit der für ihren Betrieb erforderlichen Hochspannung versorgt wird. Das elektrische Vorschaltgerät 14 ist mit dem elektrischen Bordnetz des Kraftfahrzeugs verbunden und enthält unter anderem Einrichtungen zum Zünden der Gasentladungslampe sowie um deren stabilen Betrieb zu sichern, wobei das Vorschaltgerät in ein Steuerteil und ein Zündteil unterteilt sein kann. Die Rückseite der Gasentladungslampe 12 sowie des Lampenträgers 11 ist mit einer Schutzkappe 17 abgedeckt, die am Reflektor 10 oder am Lampenträger 11 beispielsweise mittels einer Rastverbindung befestigbar ist.

Mit dem Vorschaltgerät 14 ist eine elektrische Leitung 19 verbunden, die einen in der Schutzkappe 17 angeordneten Schalter 21 enthält, der als sogenannter Reedschalter ausgebildet ist und der unter der Einwirkung von magnetischen Kräften öffnet bzw. schließt. Der Schalter 21 weist ein rohrförmiges Gehäuse auf, in dem ein feststehendes Kontaktteil 22 und ein bewegliches Kontaktteil 23 angeordnet sind. Am Lampenträger 11 ist dem Schalter 21 gegenüberliegend ein Magnet 24 angeordnet. Unter Wirkung des Magneten 24 wird das bewegliche Kontaktteil 23 in der Anlage am feststehenden Kontaktteil 22 gehalten. Ohne die Wirkung des Magneten hebt das Kontaktteil 23 ab und der Schalter 21 ist geöffnet. Bei nicht montierter Schutzkappe 17 ist der Schalter 21 geöffnet und die Leitung 19 unterbrochen, wobei dann durch eine im Steuerteil des Vorschaltgeräts 14 integrierte Sicherheitsschaltung ein Zünden bzw. ein Betrieb der Gasentladungslampe 11 verhindert ist. Bei montierter Schutzkappe 17 ist der Schalter 21 durch die Wirkung des Magneten 24 geschlossen und die Gasentladungslampe 11 kann betrieben werden.

Bei zu einem Austausch der Gasentladungslampe 11 entfernter Schutzkappe 17 kann somit keine Hochspannung an der Gasentladungslampe 11 anliegen, so daß ein Lampenwechsel gefahrlos möglich ist.

Bei einer nicht dargestellten Variante kann der Reflektor im einem Gehäuse angeordnet sein, das an seiner Rückseite eine Öffnung aufweist, wobei die Schutzkappe 17 dann am Gehäuse, beispielsweise am Rand der Öffnung befestigt ist.

Der Reflektor 10 des in der Figur dargestellten Scheinwerfers kann als Ellipsoid-Reflektor ausgeführt werden, wobei dann in Richtung der vom Reflektor reflektierten Lichtstrahlen eine Blende 26 und ein Objektiv 27 angeordnet sind. Zur Abschirmung der von der Gasentladungslampe 12 ausgesandten UV-Strahlung ist das Obejektiv 27 als UV-Filter ausgebildet und in einem mit dem Vorderrand des Reflektors 10 verbundenen, an seinem Umfang geschlossenen Träger 28 angeordnet.

Um zu verhindern, daß die Gasentladunglampe 12 auch bei nicht intaktem Objektiv 27 und damit nicht intaktem UV-Filter betrieben wird, ist die Leitung 19 vom Schalter 21 in einer gestrichelt eingezeichneten Leitung 19′ zu einer Einrichtung 29 weitergeführt, in der die Leitung 19′ bei beispielsweise infolge eines Aufpralls gegen die Einrichtung stoßendem Objektiv unterbrochen wird. Auch bei beschädigtem Objektiv 27 ist somit der Betrieb der Gasentladungslampe durch die Sicherheitsschaltung des Vorschaltgeräts 14 verhindert.

## Patentansprüche

1. Scheinwerfer für Kraftfahrzeuge mit einem Reflektor (10), in den über einen Lampenträger (11) eine Gasentladungslampe (12) eingesetzt ist, die über eine Hochspannungsleitung (15) mit einem elektrischen Vorschaltgerät (14) verbunden ist, wobei der Lampenträger (11) und die Gasentladungslampe (12) an ihrer Rückseite mittels einer lösbaren Schutzkappe (17) abgedeckt sind und eine elektrische Leitung (19) vorgesehen ist, die beim Entfernen der Schutzkappe (17) unterbrochen wird, so daß der Betrieb der Gasentladungslampe (12) verhindert ist, dadurch gekennzeichnet, daß die Hochspannungsleitung (15) beim Entfernen der Schutzkappe (17) nicht unterbrochen wird, daß die elektrische Leitung (19) zusätzlich zur Hochspannungsleitung (15) vorgesehen ist und einen Schalter (21) enthält, der beim Entfernen der Schutzkappe (17) geöffnet wird und daß die zusätzliche elektrische Leitung (19) mit einer Sicherheitsschaltung des Vorschaltgeräts (14) verbunden ist, durch die bei geöffnetem Schalter (21) der Betrieb der Gasentladungslampe (12) verhindert wird.

2. Scheinwerfer nach Anspruch 1, dadurch gekennzeichnet, daß der Schalter (21) durch magnetische Kräfte betätigbar ist und am Lampenträger (11) oder an der Schutzkappe (17) angeordnet ist und daß am anderen der Teile Lampenträger oder Schutzkappe ein Magnet (24) angeordnet ist, durch den bei montierter Schutzkappe (17) der Schalter geschlossen gehalten wird.

3. Scheinwerfer nach einem der vorstehenden Ansprüche, dadurch gekennzeichnet, daß die Schutzkappe (17) mittels einer Rastverbindung lösbar befestigbar ist.

4. Scheinwerfer nach einem der vorstehenden Ansprüche, dadurch gekennzeichnet, daß die Schutzkappe (17) am Reflektor (10) befestigbar ist.

5. Scheinwerfer nach einem der Ansprüche 1 bis 3, dadurch gekennzeichnet, daß der Reflektor (10) in einem Gehäuse angeordnet ist und die Schutzkappe (17) am Gehäuse befestigbar ist.

## Claims

1. Headlamp for motor vehicles with a reflector (10) into which a gas discharge lamp (12) is inserted via a lamp holder (11), the said gas discharge lamp (12) being connected to an electrical ballast (14) via a high voltage line (15), the lamp holder (11) and the gas discharge lamp (12) being covered at their rear by means of a removable protective cap (17) and an electrical line (19) being provided which is disconnected when the protective cap (17) is removed so that the operation of the gas discharge lamp (12) is prevented, characterized in that the high-voltage line (15) is not disconnected when the protective cap (17) is removed, in that the electrical line (19) is provided in addition to the high-voltage line (15) and contains a switch (21) which is opened when the protective cap (17) is removed, and in that the additional electrical line (19) is connected to a safety circuit of the ballast (14), by means of which safety circuit the operation of the gas discharge lamp (12) is prevented when the switch (21) is opened.

2. Headlamp according to Claim 1, characterized in that the switch (21) can be actuated by magnetic forces and is arranged on the lamp holder (11) or on the protective cap (17), and in that a magnet (24) is arranged on the other one of the lamp holder or protective cap parts, by means of which magnet (24) the switch is kept closed when the protective cap (17) is mounted.

3. Headlamp according to one of the preceding claims, characterized in that the protective cap (17) can be removably attached by means of a catch connection.

4. Headlamp according to one of the preceding claims, characterized in that the protective cap (17) can be attached to the reflector (10).

5. Headlamp according to one of Claims 1 to 3, characterized in that the reflector (10) is arranged in a housing and the protective cap (17) can be attached to the housing.

## Revendications

1. Projecteur pour véhicules automobiles avec un réflecteur (10) dans lequel est inséré au moyen d'un support de lampe (11) un tube à gaz lumineux (12) qui est relié par une ligne à haute tension (15) à un régulateur électrique de puissance (14), le support de lampe (11) et le tube à gaz lumineux (12) étant recouverts sur leur face arrière au moyen d'un capot de protection que l'on peut enlever et une ligne électrique (19) étant prévue, qui est coupée lors de l'enlèvement du capot de protection (17), de telle sorte que le tube à gaz lumineux (12) soit empêché de fonctionner, projecteur caractérisé en ce que la ligne à haute tension (15) n'est pas coupée quand on enlève le capot de protection (17), en ce que la ligne électrique (19) est prévue en addition à la ligne haute tension (15) et contient un interrupteur (21) qui est ouvert quand le capot de protection (17) est enlevé et en ce que la ligne électrique additionnelle (19) est reliée à un circuit de sécurité du régulateur de puissance (14), circuit de sécurité grâce auquel on empêche de fonctionner le tube à gaz lumineux (12) quand l'interrupteur (21) est ouvert.

2. Projecteur selon la revendication 1, caractérisé en ce que l'interrupteur (21) peut être actionné par des forces magnétiques et est disposé sur le support de la lampe (11) ou sur le capot de protection (17) et en ce que sur l'autre partie, le support de lampe ou le capot de protection, un aimant est disposé, grâce auquel le circuit est maintenu fermé quand le capot de protection (17) est en place.

3. Projecteur selon l'une des revendications précédentes, caractérisé en ce que le capot de protection (17) peut être fixé au moyen d'une liaison encliquetable pouvant être détachée.

4. Projecteur selon l'une des revendications précédentes, caractérisé en ce que le capot de protection (17) peut être fixé sur le réflecteur (10).

5. Projecteur selon l'une des revendications 1 à 3, caractérisé en ce que le réflecteur (10) est disposé dans un boîtier et en ce que le capot de protection (17) peut être fixé sur le boîtier.
